# EUROPEAN PATENT APPLICATION

(11) **EP 1 840 780 A1**
(43) Date of publication of application: **03.10.2007**
(21) Application number: 06381010.5
(22) Date of filing: 09.03.2006
(51) Int. Cl.: G06F 21/00

(54) **Computerized security system integrated into a traditional physical security network, a procedure for its integration and possible configurations**

(71) Applicant: Chillida Corporacion Valenciana de Seguridad, S.L., 46023 Valencia (ES); AVILA CHULIA, Antonio, 46023 Valencia (ES)
(72) Inventor: Avila Chulia, Antonio, 46023, VALENCIA (ES)
(74) Representative: Esteban Perez-Serrano, Maria Isabel

(57) **Abstract**

A computerized security system which enables the computerized security system to be integrated into traditional physical security networks, being a further element for triggering the physical actuation of alarm systems (closing of accesses, activation of alarms, shutting off supplies, a call to the police). For this purpose the system has computer equipment provided with two software packages, one for detection of intrusion and the other for alarm management, a communications module that acts as an interface between the logic alarm software and the receiver unit. The communications module has a number of transmission channels under constant supervision.

## Description

### OBJECT OF THE INVENTION

The object of the present invention is a computerized security system integrated into traditional physical security networks, which enables attacking software blocking actions to be carried out as physical responses to unwanted software invasions.

The object of the invention is also the procedure for the integration of the computerized security system, i.e. the actions that are performed in order to integrate computerized security into traditional physical anti-intrusion security systems.

A further object of the present invention is the possible configurations that may be adopted by means of which the computerized security system may be integrated with the traditional anti-intrusion security systems that trigger off physical actions, software intrusion being just another factor triggering the physical courses of action of the security system.

The present invention is characterised by the fact of integrating the security of computerized systems into the traditional networks or means of physical security against intrusion, so that for all purposes they become just another component of the networks.

The elements making up the computer security system that is the object of the invention are: computer equipment, a communications module, and a central unit for the reception of the events generated by the communication modules. The computer equipment has two software packages installed: on the one hand a package specialized in computerized security, and on the other a package which is responsible for managing logic alarms and integrates the detection signals provided by the software specialized in computerized security into the security network.

Therefore, the present invention lies within the sphere of computerized security, having the special feature of being integrated into the traditional physical anti-intrusion security systems.

### BACKGROUND OF THE INVENTION

Hitherto computer security against unwanted intrusion or invasion has always been based on a software response, consisting of the filtering of the software detected as the attacker, or of notification of the attempted intrusion.

However, the existence of certain means that successfully activate hardware responses to unwanted intrusion is unknown. These responses, which go beyond mere software responses, are of particular usefulness in certain sectors, such as banking, official agencies or security.

The actions additional to a software response that would be desirable include, for instance, a physical blocking of access to the company (action on electronic locks, raising or lowering of shutters, etc.), activation of the intrusion and fire system, locking of safes, notification of the software intrusion to the central alarm receiver by means of authentication and encryption, disconnection of computer systems, (switching off PCs), notification of the intrusion to the customer via GPRS, TCP/IP, RTC, GSM, triggering of acoustic and visual alarms, activation of cameras, etc.

However, none of the hitherto known computer security systems successfully integrate the computerized security software with traditional security systems, achieving a series of additional responses that endow the computerized systems with greater security.

Therefore, one of the objects of the present invention is to overcome the above-mentioned drawbacks, achieving a computerized security system where the disadvantages stemming from the limitation of the security to a mere logic response are overcome, in the attempt to integrate logical security with traditional physical security means.

### DESCRIPTION OF THE INVENTION

The object of the computerized security system invention basically consists of the integration of the logical security systems protecting the information against computerized intrusion, manipulation and confidential data appropriation attacks with the security systems associated with the protection of the system against physical threats of robbery, fire, flooding, access control, etc.

The computerized security system that is the object of the invention is made up of:
a) A computer to be integrated into the security network, provided with two software packages
b) A communications module
c) A communications receiver unit
The software packages with which the computer equipment is provided are:
- A package specialized in computerized security, i.e. an intrusion detection system.
- A software package responsible for handling the logic alarms that integrates the detections provided by the IDS in the security system.
The communications module is responsible for transmitting the detections provided to remote points, being equipped for this purpose with various communication channels (GPRS, TCP/IP, GSM and RTC). This module is the one responsible for authenticating and encrypting the information to be exchanged with the receiver units.

The receiver unit of the events transmitted by the communications module assures the authentication and encrypting of the information of the data received, being also provided with a software package for managing the alarms and another package for managing the events generated in the whole system.

As already mentioned, the computer equipment has an intrusion software package duly configured by specialists so that it may communicate relevant events according to individual client needs. On the other hand, the package responsible for integration of the detections is the one that picks up the appearance of events, analyzes them and encodes them appropriately for transmission to the communications module.

What we have referred to as the computer equipment may be housed in every one of the units connected in network, so all clients have maximum security in data protection. Another possibility is that only the server providing the confidential information should have the intrusion and alarm management software, and lastly a special purpose unit could be used containing said software packages.

In its operation, the intrusion detection software goes through three basic stages: data collection, analysis and response. Data collection consists of establishing records of audits, systems, applications, file systems, network packages, etc. The second stage of the software verifies the possible improper use, and lastly the third stage executes the response, which could either be passive (such as generation of events, sending e-mails, messages to mobile phones, etc), or active (closing the user's session or blocking the intrusion connection). Thanks to the integration of this type of intrusion detection software it is possible to upgrade the active response capability: disconnection of power supply, triggering of alarm buzzers, calls to a central receiver unit, closing of accesses, etc.

Furthermore, the logic alarm management software is responsible for communicating and interpreting the data supplied by the intrusion detection system, by means of sending the consequent warning signal to the communications module over a private network.

As regards the logical alarm management system, it has the following features relating to authentication and encryption.
- The confidentiality of the messages is achieved by means of 128-bit cryptographic ciphering.
- Their integration is secured by means of the 160-bit "checksum" generated signature on packages.
- Authentication is done symmetrically on the HAMC protocol base by means of the "hash" function with a generated value of 160 bits and use of "time stamps".

The communications module is a communications interface between the client's system network and the central receiver unit, seeking to achieve as its goal a physical response to intrusions of a logical nature. For this purpose, once the intrusion has been identified and the alert signal received, the communications module gets in touch with the central receiver unit over its own communication channel, with levels of authentication and ciphering.

In the event of sabotage to the communication module of any of the alert transmission channels, the central communications unit has a series of redundant transmission channels. The communications module has the possibility of transmitting over four different physical channels (Ethernet, RTB, GPRS and GSM). In addition, the actual module itself is capable of activating on its own acoustic alarms, relay actuating systems for opening/closing doors, windows, shutting off power supply, etc. thanks to its outputs and inputs.

The features of the communications module may therefore be summarized as follows:
- It permits the transmission of a signal from the intrusion detection software by any of the means of transmission that it may have available (TCP/IP, GPRS, GSM, RTC).
- The unit has an input for data in order to encapsulate, authenticate and cipher them by any of the above-mentioned means.
- The module is capable of selecting the means by which to transmit the information depending on its availability.
- This unit is the one responsible for monitoring the state of the central logic unit, and any anomaly detected is notified to the central receiver unit, where the appropriate measures are then taken.
- The transmission channels are tested periodically with an interval that may be programmed separately for each channel in order to adjust the traffic of each channel, the costs, bandwidth and other parameters.
- If a failure is detected in any of the transmission channels, a failure signal is sent to the receiver unit over any other channel available.
- The communications module is capable of receiving and interpreting data so as to modify its configuration and control options from a remote receiver over a TCP/IP channel.
- It is provided with an integrated power supply for connection to the mains as well as a power input for a battery.
- It has a direct alarm input block for the connection of the output relay of any type of sensor, as well as an output block for activating actuators.
- It has a local communication interface.
- The equipment has LEDs indicating its status, with which its correct working or any possible dysfunction in the unit will be indicated.

Furthermore, the computerized security system communications receiver installed in the central receiver unit is responsible for:
- The reception of alarms over any of the channels available (GPRS, TCP/IP, GSM, RTC).
- Identification of the communications modules
- Managing the actions to be implemented after identification of an intrusion in the client's software.
- Managing the action database, and clients.
- Supervision of the client communications modules.
- Continuous line supervision.
- Authentication and encryption system for maintaining a dialogue with the rest of the system.

### DESCRIPTION OF THE DRAWINGS

To supplement the description that is going to be given below and in order to assist a clearer understanding of its features, the present descriptive report is accompanied by a set of drawings in whose figures the most significant features of the invention are represented for informative but non-restrictive purposes.

Figure 1 shows a representation of one of the possible architectures of use of the security system that is the object of the invention, in which all the equipment items are provided with intrusion software.

Figure 2 shows another possible embodiment architecture in which the computerized security system is only implemented in the server that provides confidential information.

Figure 3 shows another possible embodiment architecture of the security system in which it is provided with an exclusive unit that analyzes the intrusion functions.

### PREFERRED EMBODIMENT OF THE INVENTION

In the light of the above-mentioned figures we now go on to describe a mode of preferred embodiment of the invention as well as the explanation of the drawings.

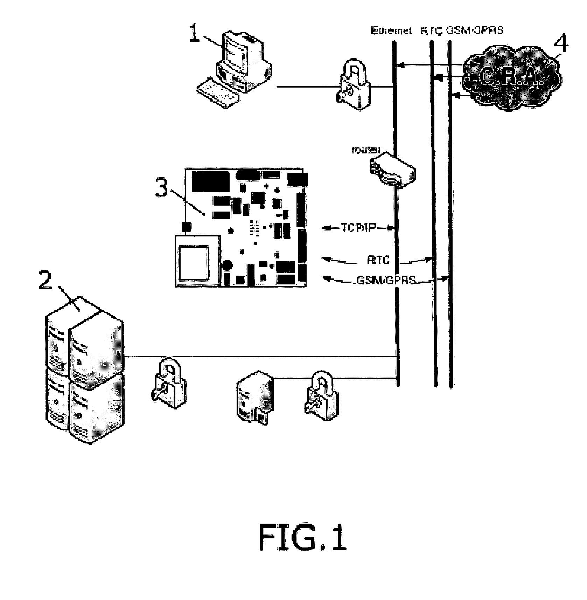

In figure 1 we may observe a configuration in which all the user computer equipment items (1) and other network equipment (2) have the intrusion detection software installed, as well as the alarm management software. In this case each of the items of equipment has maximum security in protection of data as all the units are the units are connected to the communications module (3). Each one of the clients presents maximum data protection security: authentication, encryption, and logical and physical response to intrusion. However, this is not the usual scenario.

The communications module (3) has a number of communication channels (GPRS, TCP/IP, GSM, RTC) with the receiver unit (4) responsible for managing the physical actions to be implemented after identification of a software intrusion, such as for instance (a call to the police, blocking of locks, triggering of acoustic and visual alarms, etc), just like any other physical anti-intrusion security system.

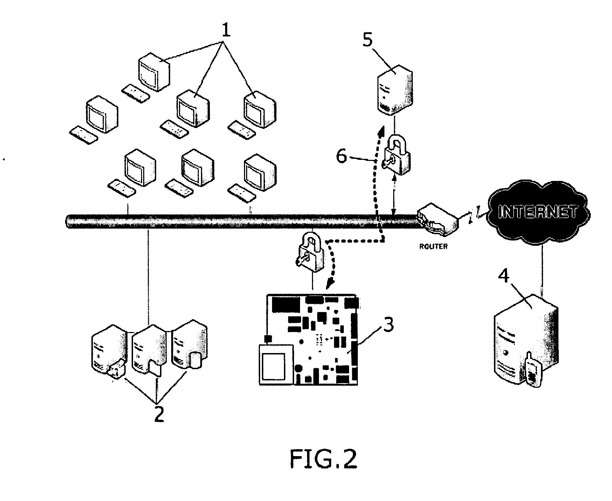

Figure 2 shows another possible architecture, where in this case the alarm management intrusion detection software is only disposed on the unit (5) storing confidential data. This configuration is used when the confidential data are centralized and the rest of the units (1) and (2) access it in order to refer to its databases.

In this case maximum security is concentrated on the applications server, on which the IDS software IDS and the Logic Alarm Manager will be installed.

The local accesses to each PC or equipment item (1) and (2) are not protected, although the accesses to the restricted data area of the server are indeed protected. The connection (6) made with the dotted line is the only secure one and it is set up between the unit (5) we want to protect and the communications module (3).

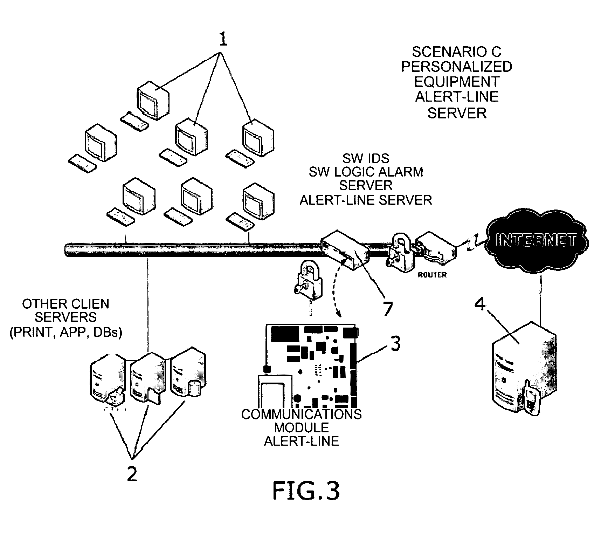

Figure 3, shows a configuration which includes a special-purpose unit (7) that performs the intrusion and alarm detection functions. This solution permits cheaper and more straightforward maintenance, trouble-free updates and immediate installation.

As may be observed, it also has a communications module (3) with which it is connected securely and the latter is connected via the network or any other channel with the receiver unit (4).

Therefore, the procedure by means of which the computerized security system is integrated with the traditional anti-intrusion security systems consists of the following stages:
- Detection of a computerized intrusion by means of intrusion detection software.
- Communication and interpretation of the data supplied by the intrusion detection software using a logic alarm management software package for this purpose.
- Sending of an alert message by the alarm management software to the communications module, a message that is duly authenticated and encrypted.
- Transmission of intrusion signals from the communications module to the remote units by means of any of the communication channels with which it is provided.
- Activation of the possible alarms with which the actual communications module is equipped.
- Reception of the signals by the receiver units.
- Management of the actions to be implemented after the identification of a software intrusion.

It is not considered necessary to make this description more extensive for any expert on the matter to be able to appreciate the scope of the invention and the advantages stemming from it.

The materials, form, size and layout of the elements will be amenable to variation providing that they do not alter the essential nature of the invention.

The terms in which this report is described should always be taken in the broadest and non-restrictive sense.

## Claims

1. A computerized security system integrated into the traditional physical anti-intrusion security systems, **characterised in that** it protects the information against software intrusion, manipulation and confidential data appropriation attacks, integrating this security system into the traditional physical anti-intrusion security systems, being composed of:
- Computer equipment to be integrated into the security network, provided with two software packages.
- A communications module.
- A communications receiver unit.

2. A computerized security system integrated into the traditional physical security networks as defined in claim one, **characterised in that** the two software packages with which the computer equipment is provided are:
- A package specialized in computerized security, i.e. an intrusion detection system.
- A software package responsible for the management of logic alarms integrating the detections provided by the IDS in the security network.

3. A computerized security system integrated into the traditional physical security networks as defined in claim 1, **characterised in that** the communications module is responsible for transmitting the detections provided to remote points, being provided for this purpose with various channels or paths of communication (GPRS, TCP/IP, GSM and RTC). This module is also the one responsible for authenticating and encrypting the information to be exchanged with the receiver units.

4. A computerized security system integrated into the traditional physical security networks as defined in claim 1, **characterised in that** the computerized security system communications receiver installed in the central receiver is responsible for:
- The reception of alarms over any of the channels available (GPRS, TCP/IP, GSM, RTC).
- Identification of the communications modules.
- Management of the actions to be implemented after identification of an intrusion in the client's software.
- Management of the action database and clients.
- Supervision of the client communications module. 15
- Continuous line supervision.
- System of authentication and encryption to maintain a dialogue with the rest of the system.

5. A computerized security system integrated into the traditional physical security networks as defined in claim 2, **characterised in that** the logic alarm management software presents the following features in respect of authentication and encryption.
- Confidentiality of the messages is achieved by means of 128-bit cryptographic ciphering.
- Their integration is secured by means of the "checksum" generated signature on the 160-bit packages.
- Authentication is done symmetrically on the basis of the HAMC protocol, by means of the "hash" function with a generated value of 160 bits and use of "time stamps".

6. A computerized security system integrated into the traditional physical security networks as defined in claim 3, **characterised in that** the communications module:
- Permits the transmission of a signal from the intrusion detection software over any of the transmission means that is has available (TCP/IP, GPRS, GSM, RTC).
- The equipment has an input for data in order to encapsulate, authenticate and cipher, and transmit them over any of the above-mentioned means.
- The module is capable of selecting the means over which to transmit the information depending on its availability.
- This equipment has the responsibility for monitoring the state of the central logic unit, any anomaly being notified to the central receiver unit so that the appropriate measures may be taken there.
- The transmission channels are tested periodically at an interval that may be programmed separately for each channel in order to adjust the traffic of each channel, the costs, bandwidth and other parameters.
- If a failure is detected in any of the transmission channels, a failure signal is sent to the reception unit over any other channel available.
- The communications module is capable of receiving and interpreting data in order to modify its configuration and control options from a remote receiver over a TCP/IP channel.
- It is provided with an integrated power supply for connection to the mains as well as a battery power input.
- It has a direct alarm input block for the connection of the relay output of any kind of sensor, as well as an output block for activating actuators.
- It has a local communication interface.
- The equipment is provided with status indicator LEDs with which its correct working or any possible dysfunction in the equipment will be indicated.

7. A procedure for the integration of the computerized security system into the traditional physical security networks, claimed previously, **characterised in that** it consists of the following stages in order to carry out said integration.
- Detection of a software intrusion by means of the intrusion detection software.
- Communication and interpretation of the data supplied by the intrusion detection software using a logic alarm management software package for this purpose.
- Sending of an alert message by the alarm management software to the communications module, a message that is duly authenticated and encrypted.
- Transmission of intrusion signals from the communications module to the remote units by means of any of the communication channels with which it is provided.
- Activation of the possible alarms with which the actual communications module is equipped.
- Reception of the signals by the receiver units.
- Management of the actions to be implemented after the identification of a software intrusion.

8. Configuration to achieve the integration of a computerized security system into the traditional physical security networks, claimed previously, **characterised in that** both an intrusion detection software package and the alarm management software are installed on each one of the units connected to the network, each one of said units presenting maximum data protection security.

9. Configuration to achieve the integration of a computerized security system into the traditional physical security networks, claimed previously, **characterised in that** the intrusion detection software and the alarm management software are installed on the equipment in which all the confidential data are centralized and all the other units access this.

10. Configuration to achieve the integration of a computerized security system into the traditional physical security networks, claimed previously, **characterised in that** it is provided with a special purpose unit connected to the network where both the intrusion detection software and the logic alarm management software are installed, and use is not made of a server belonging to the company.

## Amended claims

### Amended claims in accordance with Rule 86(2) EPC.

**1.** A computerized security system integrated into physical security networks, comprising:
A computer equipment to be integrated into the security network, provided with two software packages
- A package specialized in computerized security, i.e. an intrusion detection system.
- A software package responsible for the management of logic alarms integrating the detections provided by the IDS in the security network.
**characterised in that** it protects the information against software intrusion, manipulation and confidential data appropriation attacks, integrating this security system into a physical anti-intrusion security systems, being composed additionally of:
- A communications module which is responsible for transmitting the detections provided to remote points, being provided for this purpose with various channels or paths of communication (GPRS, TCP/IP, GSM and RTC), this module is also the one responsible for authenticating and encrypting the information to be exchanged with the receiver units.
- A communications receiver unit.

**2.** A computerized security system integrated into physical security networks as defined in claim 1, **characterised in that** the computerized security system communications receiver installed in the central receiver is responsible for:
- The reception of alarms over any of the channels available (GPRS, TCP/IP, GSM, RTC).
- Identification of the communications modules.
- Management of the actions to be implemented after identification of an intrusion in the client's software.
- Management of the action database and clients.
- Supervision of the client communications module. 15
- Continuous line supervision.
- System of authentication and encryption to maintain a dialogue with the rest of the system.

**3.** A computerized security system integrated into a physical security networks as defined in claim 1, **characterised in that** the logic alarm management software presents the following features in respect of authentication and encryption.
- Confidentiality of the messages is achieved by means of 128-bit cryptographic ciphering.
- Their integration is secured by means of the "checksum" generated signature on the 160-bit packages.
- Authentication is done symmetrically on the basis of the HAMC protocol, by means of the "hash" function with a generated value of 160 bits and use of "time stamps".

**4.** A computerized security system integrated into a physical security networks as defined in claim 1, **characterised in that** the communications module:
- Permits the transmission of a signal from the intrusion detection software over any of the transmission means that is has available (TCP/IP, GPRS, GSM, RTC).
- The equipment has an input for data in order to encapsulate, authenticate and cipher, and transmit them over any of the above-mentioned means.
- The module is capable of selecting the means over which to transmit the information depending on its availability.
- This equipment has the responsibility for monitoring the state of the central logic unit, any anomaly being notified to the central receiver unit so that the appropriate measures may be taken there.
- The transmission channels are tested periodically at an interval that may be programmed separately for each channel in order to adjust the traffic of each channel, the costs, bandwidth and other parameters.
- If a failure is detected in any of the transmission channels, a failure signal is sent to the reception unit over any other channel available.
- The communications module is capable of receiving and interpreting data in order to modify its configuration and control options from a remote receiver over a TCP/IP channel.
- It is provided with an integrated power supply for connection to the mains as well as a battery power input.
- It has a direct alarm input block for the connection of the relay output of any kind of sensor, as well as an output block for activating actuators.
- It has a local communication interface.
- The equipment is provided with status indicator LEDs with which its correct working or any possible dysfunction in the equipment will be indicated.

**5.** A computerized security system according to any claims 1-4 **characterised in that** both an intrusion detection software package and the alarm management software are installed on each one of the units connected to the network, each one of said units presenting maximum data protection security.

**6.** A computerized security system according to any claims 1-4, **characterised in that** the intrusion detection software and the alarm management software are installed on the equipment in which all the confidential data are centralized and all the other units access this.

**7.** A computerized security system according to any claims 1-4 **characterised in that** it is provided with a special purpose unit connected to the network where both the intrusion detection software and the logic alarm management software are installed, and use is not made of a server belonging to the company.

**8.** A procedure for protection of the computerized security system previously claimed **characterised in that** it consists of the following stages in order to protect against software intrusion or physical threads.
- Detection of a software intrusion by means of the intrusion detection software.
- Communication and interpretation of the data supplied by the intrusion detection software using a logic alarm management software package for this purpose.
- Sending of an alert message by the alarm management software to the communications module, a message that is duly authenticated and encrypted.
- Transmission of intrusion signals from the communications module to the remote units by means of any of the communication channels with which it is provided.
- Activation of the possible alarms with which the actual communications module is equipped.
- Reception of the signals by the receiver units.
- Management of the actions to be implemented after the identification of a software intrusion.
